# EUROPEAN PATENT APPLICATION

(11) **EP 0 840 036 A1**
(43) Date of publication of application: **06.05.1998**
(21) Application number: 97118651.5
(22) Date of filing: 27.10.1997
(51) Int. Cl.: F16G 1/08, F16G 1/28

(54) **Tension member for belt and power transmission belt**

(30) Priority: 05.11.1996 JP 292740/96
(71) Applicant: BANDO CHEMICAL INDUSTRIES, LIMITED, Hyogo-ku Kobe-shi (JP)
(72) Inventor: Takeuchi, Yuji, Hyogo-ku, Kobe-shi (JP); Nakashima, Eijiro, Hyogo-ku, Kobe-shi (JP)
(74) Representative: Laufhütte, Dieter, Dr.-Ing.

(57) **Abstract**

A plurality of fiber strands made of high-strength glass fibers 7 having a filament diameter of 5 to 8 µm are collected, are dipped in an RFL liquid, are heat-treated and are then first-twisted, thereby forming a first twist yarn 6. 10 to 13 first twist yarns 6 thus obtained are parallel-arranged and are subjected to a final twist in a direction opposite to the first twist, thereby forming a tension member 2. The number of first twists is set at 4.0 to 6.6 times per 10 cm and the number of final twists is set at 8.0 to 9.4 times per 10 cm, so that static damage to the tension member is reduced without impairing the shape stability and workability of the tension member, thereby increasing the flex fatigue resistance of the belt.

## Description

### Technical Field

This invention relates to a tension member for belt capable of being embedded in various kinds of belts and a power transmission belt using the same.

### Background Art

A power transmission belt such as a synchronous belt generally uses a code made of glass fibers as its tension member in order to increase its strength, durability or dimensional stability.

The tension member of the power transmission belt repeatedly undergoes bending stress associated with the run of the belt so that it causes fatigue thereby decreasing its performance. In view of this point, a technique for increasing the durability of the belt is disclosed in Japanese Utility-Model Application Laid-Open Gazette No. 1-111848 in which high-strength glass fibers having a smaller filament diameter than conventional E-glass fibers have are used in place of the E-glass fibers to reduce the cord diameter thereby increasing the durability of the belt.

Though the above-mentioned cord made of high-strength glass fibers can provide increased durability of the belt, the degree of increase in durability is not so high even though the cord has a considerably higher tensile strength than the conventional cord made of E-glass fibers has.

### Disclosure of Invention

In view of the above problem, the present invention has its object of providing a tension member for belt using high-strength glass fibers which has more excellent properties than the prior art and providing a power transmission belt using the tension member.

Inventors have conducted manufactures, tests and examinations of prototypes of tension members for belt made of high-strength glass fibers, have found below-mentioned facts and have completed the present invention.

Conventionally, in the case of manufacturing a tension member for belt with the use of high-strength glass fibers, the twisting of the fibers is basically executed in the same manner as in the case of twisting E-glass fibers. The high-strength glass fiber not only has a high tensile strength but also can reduce its filament diameter as compared with the E-glass fiber, but on the other hand, it is more brittle than the E-glass fiber. In the present invention, the twisting of the high-strength glass fiber is suitably executed in view of the above-mentioned properties of the high-strength glass fiber, thereby substantially improving the performance of the tension member and further the performance of the power transmission belt.

More specifically, the present invention is directed to a tension member for belt formed in a manner of collecting a plurality of strands made of high-strength glass fibers, dipping the strands in a treatment liquid including as a main ingredient a mixture of a resorcinol-formaldehyde precondensate and rubber latex (hereinafter, referred to as an RFL liquid), subjecting the strands to heat treatment, first-twisting the strands into a first twist yarn, parallel-arranging a specified number of the first twist yarns and final-twisting the first twist yarns in a direction opposite to the first twist. The tension member for belt is characterised in that a filament diameter of the high-strength glass fiber is 5 to 8 µm and the number of first twists is 4.0 to 6.6 times per 10 cm.

The high-strength glass fiber in this invention means a glass fiber having a tensile strength of 300 kgf/mm² or more, preferably 350 kgf/mm² or more. An example of suitable high-strength glass fibers is a high-strength glass fiber which contains 65% SiO₂, 25% Al₂O₃, 9-10% MgO and other metallic oxides (Na₂O, K₂O, Fe₂O₃, Zr₂O₃ and so on) of less than 1% and has a tensile strength of 437 kgf/mm². Another example of suitable high-strength glass fibers is a high-strength glass fiber which includes 65% SiO₂, 24.2% Al₂O₃, CaO of less than 0.1% and 10.1% MgO and has a tensile strength of 400 kgf/mm². Still another example of suitable high-strength glass fibers is a high-strength glass fiber which includes 52-56% SiO₂, 28-32% Al₂O₃, 9-12% CaO, Na₂O + K₂O of less than 0.1%, and other metallic oxides such as Y₂O₃ of less than 7% and has a tensile strength of 430 kgf/mm².

The reason why the filament diameter of the high-strength glass fiber is set at 5 to 8 µm is that the high-strength glass fiber has a high strength and therefore can obtain a strength as large as or larger than the E-glass fiber even if the diameter is reduced and further such reduction in diameter provides increased flex fatigue resistance.

Since the number of first twists of each first yarn of the tension member is 4.0 to 6.6 times per 10cm, this reduces static damage to the tension member while ensuring the shape stability of the tension member. When the number of first twists is below 4.0 times per 10 cm, a phenomenon such as an untwist easily occurs so that the subsequent process becomes difficult. As a result, the tension member cannot ensure shape stability. On the other hand, when the number of first twists is above 6.6 times per 10 cm, excessive strains are applied to the high-strength glass fibers as brittle material so that static stress acting on the glass fiber is increased, which makes the tension member susceptible to damage.

Preferably, the number of first twist yarns forming the tension member is 10 to 13. This provides an advantage of ensuring a desired belt strength while preventing increase in diameter of the tension member. When the number of first twist yarns is below 10, a belt strength is decreased though there is an advantage of increasing the flex fatigue resistance of the tension member. On the other hand, when the number of first twist yarns is above 13, there is a disadvantage in flex fatigue resistance.

It is preferable that the number of final twists is 8.0 to 9.4 times per 10cm. This provides an advantage of ensuring the strength and shape stability of the power transmission belt. When the number of final twists is below 8.0 times per 10cm, the tightness of twist yarns is decreased. When a belt using such a low-tightness tension member is run, the large degree of freedom of each first twist yarn decreases the shape stability of the tension member, resulting in a shortened belt life. When the number of final twists is above 9.4 times per 10cm, the strength of the tension member is extremely decreased, thereby making it difficult to give a required strength to the belt.

The number of filaments forming each first twist yarn is not particularly limited. However, the first twist yarn is preferably formed of 400 to 600 filaments. This provides an advantage of preventing the tension member from increasing its rigidity thereby providing increased bending property.

The total number of filaments of the tension member is not particularly limited. However, it is preferably within 4000 to 8000. When the total number of filaments is below 4000, the tension member is difficult to obtain a sufficient strength. On the other hand, when the total number of filaments is above 8000, surface strains of the glass cord are increased, which counts against ease of bending.

The latex of the RFL liquid is not particularly limited. For example, there may be used, as the latex, single material or a combination of two or more kinds of material selected from styrene-butadiene-vinylpyridine terpolymer, chlorosulphonated polyethylene, nitrile rubber, hydrogenated nitrile rubber, epichlorohydrin rubber, styrene-butadiene rubber (SBR), chloroprene rubber, chlorinated butadiene rubber, olefine-vinylester copolymer and natural rubber. Further, an additive such as softener may be added to the RFL liquid as required.

When an adhesion rubber of the power transmission belt which is used for arrangement of the tension member is made of hard-to-adhere rubber material such as hydrogenated acrylonitrile-butadiene rubber (H-NBR), it is preferable that the final-twisted glass fiber cord is dipped into rubber cement and subjected to heat treatment to form a rubber film on the cord surface.

Rubber material as a main ingredient of the rubber cement is preferably a halogen-contained compound such as chlorinated rubber, polyvinyl chloride, chloroprene rubber and chlorosulphonated polyethylene rubber. A solvent for the rubber cement is not particularly limited. In general, aromatic hydrocarbon such as benzene, toluene and xylene or halogenated aliphatic hydrocarbon such as ether and trichioroethylene is preferably used for the solvent.

The type of the power transmission belt using the tension member is not particularly limited. The tension member of the present invention is usable for an endless power transmission belt in which the tension member extends in a lengthwise direction of the belt over the entire length of the belt, an outer rubber is bonded on the outer peripheral side of the tension member and an inner rubber is bonded on the inner peripheral side of the tension member. An example of such a belt is an endless synchronous power transmission belt having: a tension member which extends along the length of the belt and is wound in a spiral form to be arranged at specified pitches in a widthwise direction of the belt; a backing rubber bonded on the outer peripheral side of the tension member; and a multiplicity of tooth rubbers bonded on the inner peripheral side of the tension member at specified pitches.

The present invention can reduce static damage to the tension member and increase the flex fatigue resistance of the belt without impairing the shape stability and workability of the tension member. In particular, when the number of parallel-arranged first twist yarns for final twist is 10 to 13 and the number of final twists is 8.0 to 9.4 times per 10 cm, this provides an advantage of increasing the flex fatigue resistance of the belt while ensuring the belt strength.

### Brief Description of Drawings

Fig. 1 is a vertical cross section showing a power transmission belt.

Fig. 2 is a perspective view showing a tension member for belt.

Fig. 3 is a cross section showing the tension member for belt.

Fig. 4 is a schematic diagram showing the structure of a belt running test machine.

Fig. 5 is a graph showing the relationship between the number of first twists and a belt strength.

Fig. 6 is a graph showing the relationship between the number of first twists and a bending life time of the belt.

Fig. 7 is a graph showing the relationship between the number of final twists and a belt strength.

Fig. 8 is a graph showing the relationship between the number of final twists and a bending life time of the belt.

### Description of the Preferred Embodiments

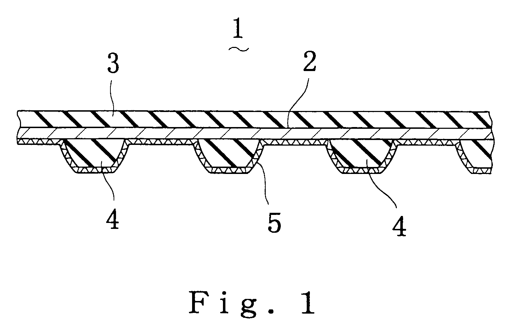

Fig. 1 shows a synchronous belt 1 as an example of a power transmission belt of the present invention. The synchronous belt 1 has a tension member 2 which extends in a belt lengthwise direction (lateral direction in Fig. 1) and which is wound in a spiral form so as to be arranged at specified pitches in a belt widthwise direction. A backing rubber 3 having a rectangular form in cross section is provided on the outer peripheral side of the tension member 2 so as to extend in the belt lengthwise direction. A multiplicity of tooth rubbers 4, 4, ... are provided on the inner peripheral side of the tension member 2 so as to be spaced at specified pitches. The tooth rubbers 4, 4, ... are covered with a facing fabric 5 forming the inner periphery of the belt 1.

For rubber material of the power transmission belt 1, a rubber compound including hydrogenated nitrile rubber as a main ingredient is used. The facing fabric 5 uses 6,6-nylon yarns as yarns oriented along the belt width and woollie yarns made of industrial 6,6-nylon as yarns oriented along the belt length.

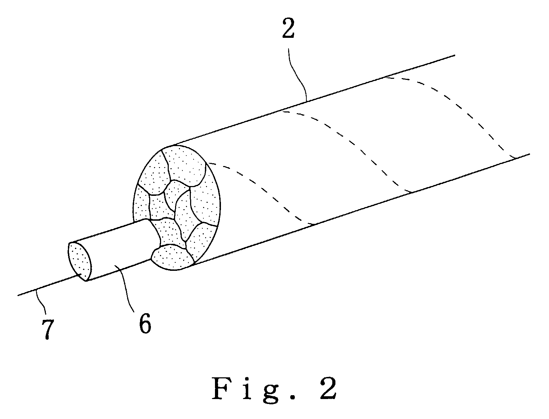

As shown in an enlarged manner in Fig. 2, in order to obtain the tension member 2, a specified number of first twist yarns 6, 6, ... are parallel-arranged and are final-twisted at a specified number of twist times in a direction opposite to the first twist. Each of the first twist yarns 6 is obtained by parallel-arranging a plurality of fiber strands and first-twisting them at a specified number of twist times. Each of the fiber strands are formed by bundling a multiplicity of glass fibers 7, 7, ..., dipping them in an RFL treatment liquid and then heat-treating them. Thereby, rubber ingredients of the RFL treatment liquid are placed in gaps of glass fibers 7, 7, ... of each of the first twist yarns 6.

The synchronous belt is formed by normal moulding. The number of teeth of the belt is 113, the pitch of the teeth 4, 4, ... is 8 mm, and the belt width is 19 mm. In each of the teeth 4, both surfaces opposite to each other in the belt lengthwise direction are swelled in an arcuate form.

The number of first twists of each first twist yarn 6 of the tension member 2 is set at 4.0 to 6.6 times per 10 cm. The number of final twists of the tension member 2 is set at 8.0 to 9.4 times per 10 cm.

### (Example 1)

Non-alkaline high-strength glass fibers (tensile strength: 437 kgf/mm²) having a diameter of 7 µm were used as glass fibers for tension member. 200 high-strength glass fibers above-mentioned were collected into a fiber strand. 3 fiber strands thus obtained were parallel-arranged, were dipped into a Vp-SBR (stylene-butadiene-vinylpiridine terpolimer) RFL liquid having a concentration of 20 weight %, were heat-treated at 240 °C for one minute, and were first-twisted at a rate of 5.6 times per 10 cm into a first twist yarn. 11 first twist yarns thus obtained were parallel-arranged and were final-twisted at a rate of 8.0 times per 10 cm, thereby obtaining a tension member cord. As a result, the total number of fibers were 6600 (=200×3×11).

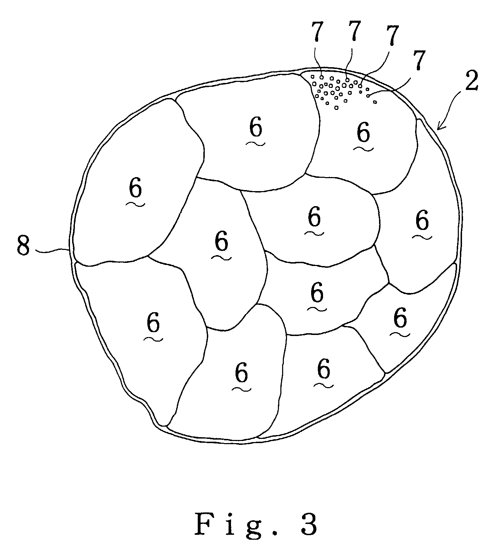

The tension member was coated with a rubber film 8 shown in Fig. 3. The rubber film 8 was formed by dipping the tension member 8 into rubber cement of a 15 weight % concentration which is a mixture of CSM (chlorosulphonated polyethylene) and crude MDI (diphenylmethane-4,4'-diisocyanate) and then heat-treating it at 120°C for one minute. The formation of the rubber film 8 was made in consideration of a point that the rubber material of the belt body is hard-to-adhere H-NBR.

With the use of the tension member thus obtained, the synchronous belt shown in Fig. 1 was formed.

According to the above-mentioned tension member, since the number of first twists is 5.6 times per 10 cm, this ensures shape stability (shape retentivity). Further, the glass fibers receive no excessive strains, so that static stress applied to the tension member is small thereby reducing damage applied thereto. Furthermore, since the number of final twists is 8.0 times per 10 cm, the tightness of the tension member can be ensured and the strength thereof can be prevented from being impaired.

### (Examples 2-12, Comparative Examples 1-7)

Respective tension members were formed in the same manner as in Example 1 except that the constitution of twist (the number of fiber strands forming the first twist yarn/the number of first twist yarns forming the tension member), the number of first twists or the number of final twists are changed to various values as shown in Table 1. Then, with the use of respective tension members thus obtained, respective synchronous belts were manufactured in the same manner as in Example 1.

### 〈Comparative Test〉

With respect to each of the synchronous belts of the above Examples and Comparative Examples, evaluation was made about a belt strength (initial strength) and flex fatigue property.

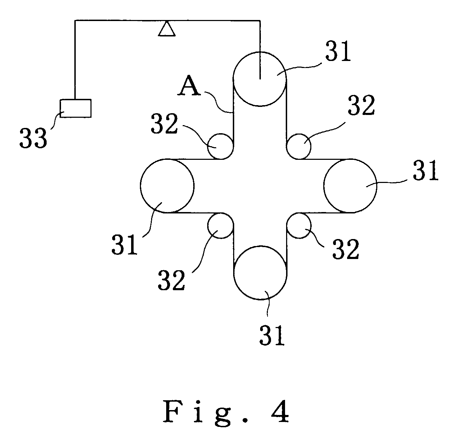

For evaluation about flex fatigue property, a belt running test machine shown in Fig. 4 was used. In the test machine, four large pulleys 31, 31, ... are arranged at top, bottom, right and left sides in the figure, respectively. Between the adjacent large pulleys 31, 31, a small pulley 32 having a diameter of 28 mm is disposed. The test was made in such a manner that a sample belt A was wound between the pulleys 31, 31, the belt A was run until it was broken under conditions that the large pulley 31 was rotated at a rate of 550 rpm and a load of 80 kgf was applied to the belt A by a weight 33, and the number of times of passage of the belt A through the small pulley 32 until the belt A was broken was counted as a bending life time of the belt A.

The test results are also shown in Table 1.

**[Table 1]**

| | Filament diam. (µm) | Constitution of twist | Number of first twists/10 cm | Number of final twists/10 cm | Belt str. (Kgf) | Bending life time (× 10⁶) |
|---|---|---|---|---|---|---|
| Example 1 | 7 | 3/11 | 5.6 | 8.0 | 1120 | 4.5 |
| Example 2 | 7 | 2/13 | 5.6 | 8.0 | 920 | 5.3 |
| Example 3 | 7 | 3/13 | 5.6 | 8.0 | 1350 | 3.2 |
| Example 4 | 7 | 3/11 | 4.0 | 8.0 | 1250 | 4.9 |
| Example 5 | 7 | 3/11 | 6.6 | 8.0 | 1180 | 3.5 |
| Example 6 | 7 | 3/11 | 5.6 | 7.2 | 1300 | 3.3 |
| Example 7 | 7 | 3/11 | 5.6 | 9.4 | 1050 | 5.3 |
| Example 8 | 7 | 3/11 | 5.6 | 10.4 | 980 | 4.3 |
| Example 9 | 7 | 3/11 | 4.0 | 9.4 | 1080 | 5.5 |
| Example 10 | 7 | 3/11 | 6.6 | 9.4 | 1050 | 4.8 |
| Example 11 | 7 | 3/11 | 4.0 | 10.4 | 1030 | 4.8 |
| Example 12 | 7 | 3/11 | 6.6 | 7.2 | 1230 | 3.3 |
| Comp. Example 1 | 7 | 3/11 | 8.0 | 8.0 | 1150 | 2.5 |
| Comp. Example 2 | 7 | 2/13 | 8.0 | 8.0 | 880 | 2.8 |
| Comp. Example 3 | 7 | 3/13 | 8.0 | 8.0 | 1320 | 1.7 |
| Comp. Example 4 | 7 | 3/11 | 3.2 | 8.0 | 1250 | 5.1 |
| Comp. Example 5 | 7 | 3/11 | 9.2 | 8.0 | 1120 | 2.0 |
| Comp. Example 6 | 7 | 3/11 | 3.2 | 9.4 | 1120 | 5.3 |
| Comp. Example 7 | 7 | 3/11 | 8.0 | 9.4 | 1000 | 2.8 |

As shown in Table 1, each of Examples 1 to 12 has a higher belt strength and an extremely longer bending life time as compared with Comparative Examples 1 to 3, 5 and 7. The reason for this is that, in each of Examples 1 to 12, the number of first twists is suitable for high-strength glass fibers so that the flex fatigue resistance of the belt is increased, and the number of final twists is suitable for high-strength glass fibers so that the balance is achieved between the belt strength and the flex fatigue resistance. More specific description is made below.

### (Effects of constitution of twist)

Examples 1 to 3 are different from each other only in the constitution of twist. If comparison is made between Examples 1 and 3, increase in the number of first twist yarns increases the belt strength but on the other hand decreases the bending life time. If comparison is made between Examples 2 and 3, increase in the number of fiber strands forming the first twist yarn increases the belt strength but on the other hand decreases the bending life time. Comparative Examples 1 to 3 are also different from each other only in the constitution of twist. Effects of the constitution of twist on the belt strength and bending life time have a tendency similar to the cases of Examples 1 to 3. Accordingly, such a tendency seems to be general.

Examples 1 to 3 are different from Comparative Examples 1 to 3, respectively, only in the number of first twists. If comparison is made between each of Examples 1 to 3 and the corresponding Comparative Example, each of Examples 1 to 3 has a higher belt strength and a longer bending life time than the corresponding Comparative Example. Accordingly, it can be found that reduction in the number of first twists provides expected effects regardless of the constitution of twist. In particular, the bending life time of each of Examples 1 to 3 is increased by approximately two times as compared with the corresponding Comparative Example. Improvement in bending life time is prominent.

### (Effects of the number of first twists)

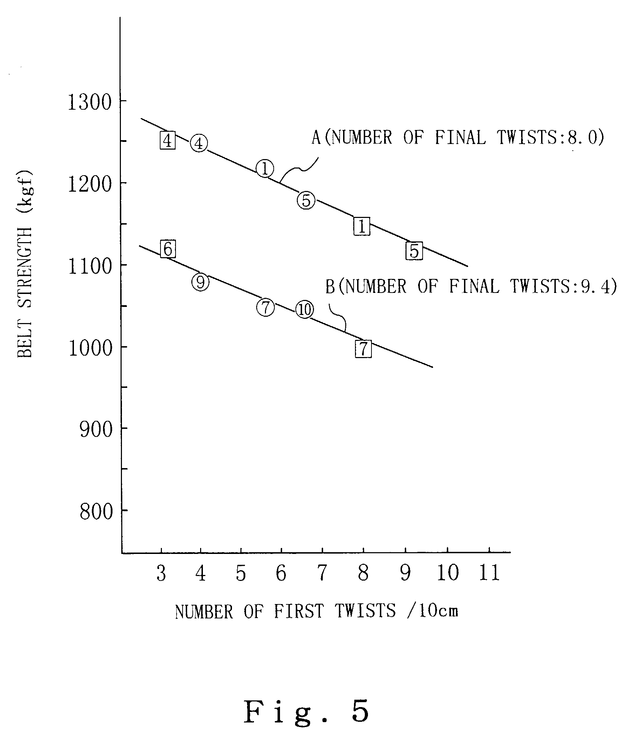

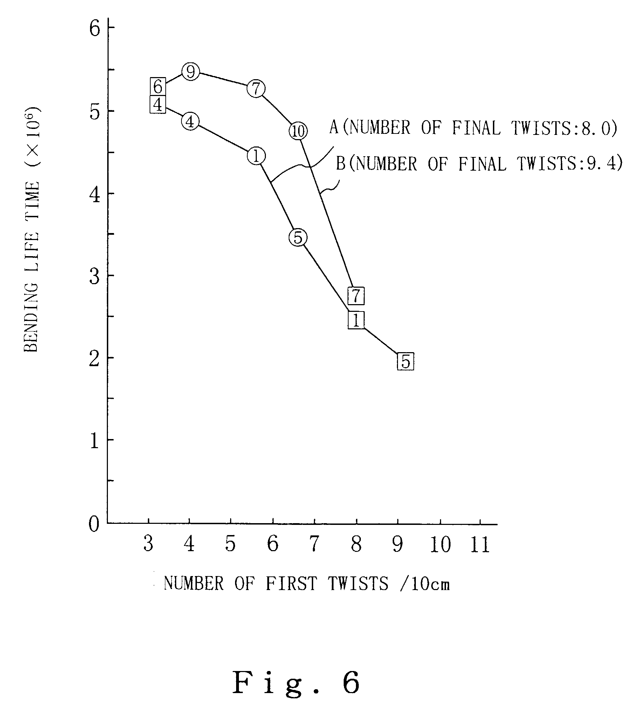

Examples 1, 4 and 5 and Comparative Examples 1, 4 and 5 have the same number of final twists of 8.0 times per 10cm but have different numbers of first twists. Based on the test results, the relationship between the number of first twists and the belt strength is shown by A (number of final twists: 8.0) in a graph of Fig. 5 and the relationship between the number of first twists and the bending life time is shown by A (number of final twists: 8.0) in a graph of Fig. 6. According to these graphs, as the number of first twists is decreased, the belt strength becomes higher and the bending life time becomes longer.

Examples 7, 9 and 10 and Comparative Examples 6 and 7 have different numbers of first twists but have the same number of final twists of 9.4 times per 10 cm. Based on the test results, the relationship between the number of first twists and the belt strength is shown by B (number of final twists: 9.4) in the graph of Fig. 5 and the relationship between the number of first twists and the bending life time is shown by B (number of final twists: 9.4) in the graph of Fig. 6. In the case of B (number of final twists: 9.4), though the belt strength is decreased as a whole and the bending life time is increased as a whole, the tendency of the belt properties depending on change in the number of first twists is as same as in the case of A (number of final twists: 8.0).

According to the above-mentioned test results, it is apparent that as the number of first twists is decreased, the belt strength becomes higher and the bending life time becomes longer. When the number of first twists is 6.6 or more, the bending life time is long even if the number of final twists is small as shown by A in the graph of Fig. 6, and a required belt strength can be ensured even if the number of final twists is small as shown by B in the graph of Fig. 5.

However, in Comparative Examples 4 and 6, since the number of first twists is 3.2 times per 10 cm, the shape stability of the first twist yarn is poor thereby degrading workability, though there is no problem in the belt strength and the bending life time. Accordingly, Comparative Examples 4 and 6 are not suitable for tension member for belt. On the contrary, Examples 4 and 9 cause no problem in shape stability. As is evident from this, the number of first twists should be 4.0 times per 10 cm.

### (Effects of the number of final twists)

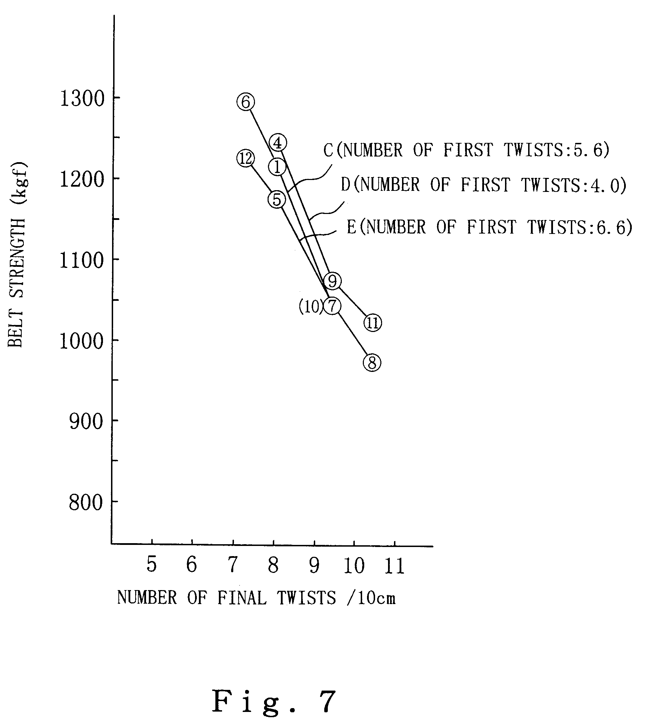

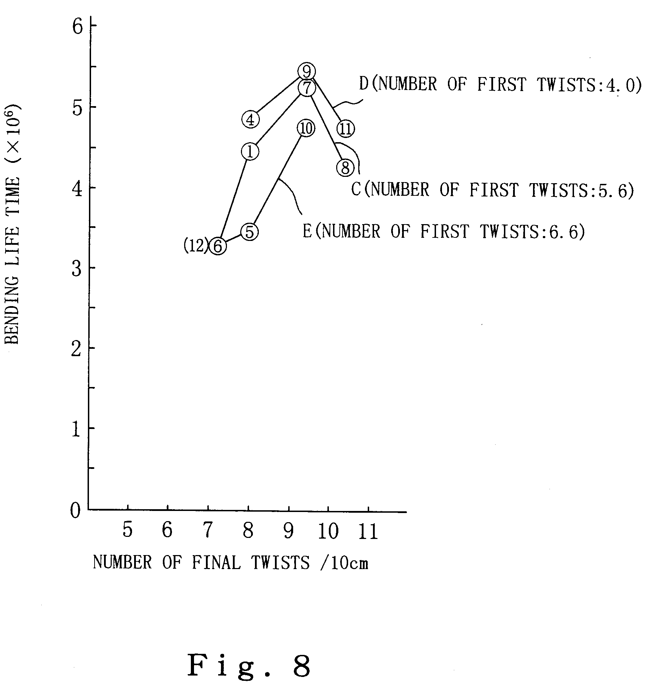

Examples 1, 6, 7 and 8 have the same number of first twists of 5.6 times per 10 cm but have different numbers of final twists. Based on the test results, the relationship between the number of final twists and the belt strength is shown by C (number of first twists: 5.6) in a graph of Fig. 7 and the relationship between the number of final twists and the bending life time is shown by C (number of first twists: 5.6) in a graph of Fig. 8. According to these graphs, as the number of final twists is decreased, the belt strength is higher but the bending life time reaches a peak value at the specific number of final twists.

Examples 4, 9 and 11 have different numbers of final twists but have the same number of first twists of 4.0 times per 10 cm. Based on the test results, the relationship between the number of final twists and the belt strength is shown by D (number of first twists: 4.0) in the graph of Fig. 7 and the relationship between the number of final twists and the bending life time is shown by D (number of first twists: 4.0) in the graph of Fig. 8. In the case of D (number of first twists: 4.0), though the belt strength is increased as a whole and the bending life time is increased as a whole, the tendency of the belt properties dependent on change in the number of final twists is as same as in the case of C (number of first twists: 5.6). Examples 5, 10 and 12 have the same number of first twists of 6.6 times per 10 cm but have different numbers of final twists. Based on the test results, the relationship between the number of final twists and the belt strength is shown by E (number of first twists: 6.6) in the graph of Fig. 7 and the relationship between the number of final twists and the bending life time is shown by E (number of first twists: 6.6) in the graph of Fig. 8. However, the tendency of the belt strength dependent on change in the number of final twists is as same as in the cases of C and D.

According to the above test results, it is apparent that as the number of final twists is decreased, the belt strength becomes higher but the bending life time reaches a peak value at the number of final twists of approximately 9.4 times per 10 cm. As the number of final twists is increased, the belt strength becomes lower as shown in Fig. 7. Accordingly, the uppermost value of the number of final twists is preferably about 9.4 times per 10 cm at which the bending life time reaches a peak value. The lowermost value of the number of final twists is preferably about 8.0 times per 10 cm in order to avoid decrease in the bending life time.

## Claims

1. A tension member for belt formed in a manner of collecting a plurality of strands made of high-strength glass fibers, dipping the strands in a treatment liquid including as a main ingredient a mixture of a resorcinol-formaldehyde precondensate and rubber latex, subjecting the strands to heat treatment, first-twisting the strands into a first twist yarn, parallel-arranging a specified number of the first twist yarns and final-twisting the first twist yarns in a direction opposite to the first twist, characterised in that
a filament diameter of the high-strength glass fiber is 5 to 8 µm and the number of first twists is 4.0 to 6.6 times per 10 cm.

2. A tension member for belt according to claim 1, characterised in that 10 to 13 first twist yarns are parallel-arranged and then final-twisted and the number of final twists is 8.0 to 9.4 times per 10cm.

3. An endless power transmission belt having: a tension member extending in a lengthwise direction of the belt over the entire length of the belt; an outer rubber bonded on the outer peripheral side of the tension member; and an inner rubber bonded on the inner peripheral side of the tension member, characterised in that
the tension member is the tension member for belt according to claim 1 or 2.

4. An endless synchronous power transmission belt having: a tension member which extends along the length of the belt and is wound in a spiral form to be arranged at specified pitches in a widthwise direction of the belt; a backing rubber bonded on the outer peripheral side of the tension member; and a multiplicity of tooth rubbers bonded on the inner peripheral side of the tension member at specified pitches, characterised in that
the tension member is the tension member for belt according to claim 1 or 2.
